**Europäisches Patentamt**

**European Patent Office**

**Office européen des brevets**

(19)

(11) Publication number : **0 586 469 B1**

(12) **EUROPEAN PATENT SPECIFICATION**

(45) Date of publication of patent specification :
**22.03.95 Bulletin 95/12**

(21) Application number : **92911007.0**

(22) Date of filing : **27.05.92**

(86) International application number :
**PCT/DK92/00166**

(87) International publication number :
**WO 92/22180 10.12.92 Gazette 92/31**

(51) Int. Cl.⁶ : **H05B 6/78**

(54) **A METHOD AND AN ELECTRODE SYSTEM FOR HEATING MEDIA FLOWING THROUGH AN INSULATING PIPE.**

(30) Priority : **28.05.91 DK 1014/91**

(43) Date of publication of application :
**16.03.94 Bulletin 94/11**

(45) Publication of the grant of the patent :
**22.03.95 Bulletin 95/12**

(84) Designated Contracting States :
**AT BE CH DE ES FR GB IT LI NL SE**

(56) References cited :
**GB-A- 2 027 528**
**GB-A- 2 053 629**
**US-A- 2 632 840**
**US-A- 3 222 491**

(73) Proprietor : **PEDERSEN, Ib Obel**
**Skolebakken 4**
**DK-2820 Gentofte (DK)**

(72) Inventor : **PEDERSEN, Ib Obel**
**Skolebakken 4**
**DK-2820 Gentofte (DK)**

(74) Representative : **Larsen, Anna et al**
**c/o Chas. Hude,**
**H.C. Andersens Boulevard 33**
**DK-1553 Copenhagen V (DK)**

EP 0 586 469 B1

## Description

### A Method and an Electrode System for Heating Media Flowing Through an Insulating Pipe

### Technical Field

The present invention relates to a method of heating media by means of high-frequency electrical power, where the medium is fed through a pipe of an electrically non-conducting material presenting substantially no dielectric losses and by which method two electrodes are arranged around the pipe, said electrodes being connected to the terminals of an HF generator and whereby a HF voltage from the HF generator is applied to the electrodes.

The method is particularly suited for heating fluid or flowing media, which may be liquid or gaseous as well as solids, especially in the form of powder or granulate.

The present invention relates furthermore to an electrode system and an assembly for carrying out the invention.

### Background Art

GB-A-2,027,528 discloses a method and an apparatus for drying a thick wet layer coated on one face of a sheet of board. The sheet of board is carried past a set of electrodes applying an electric high-frequency field thereon in such a manner that the electric field passes through the thick moist layer with the result that said layer is heated.

US-PS-4,839,485 discloses an apparatus for heating portions of articles of food on a conveyor band by means of microwaves.

GB-A-2,053,629 discloses a process and an device for heat-treatment of filiform elements, where the filaments are passed through an UHF-resonator cavity in which an electric field is parallel to the filaments.

From the wood industry and e.g. SE-A-319,129 it is known to use an HF generator and a set of capacitive high-frequency electrodes for heating wood, e.g. in connection with gluing.

US-PS-3,222,491 discloses an apparatus for continuous drying of powdery or granular materials, where the material is conveyed through a rotatable tube mounted to be rotated by a motor. The granulate inside the tube can be heated by high frequency through two elongated plate electrodes mounted diametrically opposite one another outside the tube. The plate electrodes are slightly curved in such a manner that they follow the curvature of the outer surface of the rotating tube at a small distance from said surface. A transverse electric field is formed inside the tube between the two plate electrodes.

### Description of the Invention

The object of the invention is to provide a method of heating materials having dielectric losses, where the method is far simpler than the previously known methods and can be used regardless of the materials being fluid, powdered or solid and without the electrodes necessarily getting in contact with said materials.

The method according to the invention is used for heating media by means of high-frequency electrical power, where the medium is fed through a pipe of an electrically non-conducting material presenting substantially no dielectric losses, said method being characterised in that the electrodes are substantially circumferential and arranged peripherally around the pipe at a mutual axial distance.

The arrangement of the electrodes according to the invention results in an electric field varying in time with the HF frequency and extending from one electrode ring to the other electrode ring lengthwise the pipe. The flowing medium must be a lossy medium and consequently suited for such a heating. If this condition is fulfilled, the longitudinal field is "pulled" into the pipe and through the flowing medium with the effect that said medium is heated.

The above method is so simple that it can be used even on existing pipe systems, where a demand exists for raising the temperature of the flowing medium. The only proviso is that the pipe wall must be made of a relatively loss-free, insulating material, which is often the case due to the extensive use of plastics for the manufacture of pipes. In addition, a uniform and efficient heating is obtained of the passing medium or fluid, such as a solid, granulate, fluid or gas, without said medium necessarily coming into contact with a heating means and without said medium escaping from the conveying pipe. The latter presents a great advantage in connection with many uses, such as when toxic or aggressive media are involved, and also when sensitive media are involved which cannot stand up to coming into contact with the atmosphere, or when it is desired to use a protective gas during the heating process.

An electrode system to be used when carrying out the described method is according to the invention characterised in that it comprises two ring electrodes such as ribbon electrodes of an electrically well conducting metal, such as copper, brass or aluminium, said electrodes being arranged around the outer side of a pipe of a non-conducting material presenting substantially no dielectric losses in such a way that a longitudinal electrical field arises between the two ring electrodes when an HF voltage is applied thereon.

As previously mentioned, the electrode system includes rings, preferably circular rings, but other electrode configurations can be used depending on the shape of the processing pipe, which may be square, rectangular, elliptic, triangular or approximations thereof in cross section.

Such an electrode system is remarkable for its capability of being mounted without problems on the outer side of an insulation pipe and for its capability of establishing by way of an HF field a combination of dielectric losses and resistance losses in the material across the entire cross section of said material inside the processing pipe.

The electrode system is preferably such that the position of the electrode rings or ribbons are adjustable by displacing said electrodes in the longitudinal direction of the pipe in such a manner that the distance, i.e. the pipe length, between the electrodes is optimally adjusted to the materials to be subjected to an HF processing. In this manner a substantially optimum tuning of the output circuit of the HF generator is ensured.

As a result of the above, it is very simple to establish a high-frequency impedance match between the HF generator and the material to be processed.

The system is furthermore remarkable for providing a smooth and uniform heating across the entire cross section of the material with the result that an extremely fast heating can be obtained because considerably higher amounts of energy can be supplied to the material inside the processing pipe than by other methods.

As the electrode system does not come into contact with the medium to be processing, the system can be used for heat-processing aggressive materials, inflammable materials, and materials developing toxic gases which can be removed from the processing pipe through closed suction systems.

All materials presenting a dielectric loss factor can be heated. Examples of such materials are water, aqueous solutions, powder, granulates, solids, such as wood, ceramics (in "green" state, i.e. while it is moist), articles of food, medicines, pesticides, and grain.

Brief Description of the Drawing

The invention is described in greater detail below on the basis of embodiments and with reference to the accompanying drawing, in which
Fig. 1 illustrates an example of an embodiment of a heating system according to the invention, and
Fig. 2 illustrates another embodiment according to the invention.

Best Mode for Carrying Out the Invention

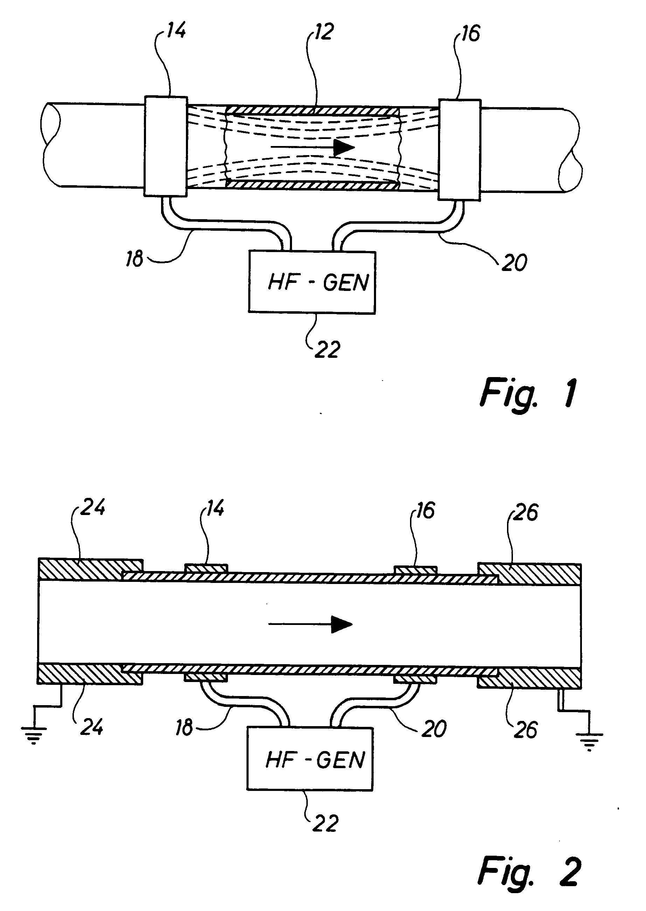

Fig. 1 illustrates an example, in which the heating system comprises a processing pipe 12 of a diameter and length suitable for the processing. The diameter may be e.g. 10 cm, and the length may be e.g. 1 m in one embodiment, and in another embodiment the diameter may be e.g. 1 m and the length e.g. 3 m. The dimensions depend on the material to be processed, and especially on the amount of the material to be processed.

The material to be processed can be pumped, pressed or conveyed in any suitable manner through the processing pipe. In addition to fluids and gases, the method can also be used for solids advanced for instance on a conveyor band.

The pipe is made of an electrically insulating material, preferably a material presenting minor or none dielectric losses, such as polyethylene, polypropylene, Teflon (PFTE), Glass, quartz glass, and aluminiumoxide. The choice of material is determined by the properties of and conditions applying to the material to be heated, such as heating temperature, aggressiveness, emission.

The pipe 12 may be of an arbitrary cross-sectional configuration, such as round, oval, square or rectangular. Two electrodes 14, 16 are mounted peripherally on the outer side of the pipe, said electrodes being in form of copper rings or collars made of circumferential copper ribbons of an arbitrary width, however with due regard to the cross-section configuration of the pipe and to the electric HF power to be transferred to the medium.

The electrodes are connected by means of high-frequency conductors 18, 20 in form of broad metal ribbons of copper, brass, aluminium or the like to their respective terminal on an HF generator 22. The HF generator 22 is preferably provided with a balanced, i.e. symmetrical, output, but the output may also be non-symmetrical.

An HF field, cf. the thin dotted lines in Fig. 1, is formed between the two electrode rings. The HF field concentrates particularly in the medium with the dielectric losses, and the electrical power is converted into heat in said medium.

The positions of the ring or collar electrodes 14, 16 can preferably be adjusted sideways, i.e. they can be displaced along the pipe. In this manner it is possible in a very simple manner to match the load impedance presented to the HF generator 22.

Fig. 2 illustrates another embodiment according to the invention. In this embodiment, flanges 24, 26 are mounted on two ends of the processing pipe 12, said flanges being made of copper, stainless steel, brass, aluminium, titanium, beryllium copper etc. The metal flanges should preferably, but not necessarily be of the same internal diameter as the insulating processing pipe. Such flanges should be connected to ground. They render it possible to meet special security provisions. In addition, the flanges ensure that the voltages applied do not arise elsewhere on undesired locations in an assembly.

Temperature sensors and/or moisture sensors can be mounted in connection with the pipe 12, said sensors monitoring the temperature and/or the moisture of the medium and optionally being coupled to a control unit controlling the output power supplied by the generator 22.

On the inner side the electrode rings can be lined with a heat-resistant material, such as Teflon, i.e. polytetrafluoroethylene, presenting minor or predominantly none dielectric losses in order to protect the heat-processing pipe against possible heat arisen in the electrodes due to copper loss.

Thus the system is also advantageous in providing an automatic regulation of the output power transferred to the materials inside the processing pipe by means of sensors built into the system, and of the temperature, the moisture etc. Accordingly, it is possible by such a method to carry out processings, such as pasteurisation, sterilisation etc, requiring an exact control of various parameters.

The operational frequences most suited for the method turned out to be 13,56 MHz and 27,12 MHz, but both considerably lower and higher HF frequences can be used where the frequency is determined by the actual application.

The output power transferred to the medium or the fluid is measured according to the following formula

$$\text{Output power in kW} = 0.07 \times \Delta T \times M$$

where M = amount of 1 per min and $\Delta T$ = temperature difference in °C.

As the medium is simultaneously heated across its entire cross section, a several times higher output can be transferred without damages to a medium compared to the conventional heating methods, where the heating is carried out by way of heat conduction and where the heat-transmitting properties of the medium are decisive for the heating rate. In this manner the damages of the processed material resulting from the conventional heating methods have been avoided, said conventional heating methods involving a heating by way of heat conduction which results in a superheating of the surface and a too poor heating in the core of the material.

## Claims

1. A method of heating media by means of high-frequency electrical power, where the medium is fed through a pipe (12) of an electrically non-conducting material presenting substantially no dielectric losses, and by which method two electrodes (14,16) are arranged around the pipe, said electrodes being connected to the terminals of an HF generator and whereby a HF voltage from the HF generator is applied to the electrodes, **characterised** in that the electrodes are substantially circumferential and arranged peripherally around the pipe at a mutual axial distance.

2. A method as claimed in claim 1, **characterised** by the medium being a fluid flowing through an insulation pipe.

3. A method as claimed in claim 1 or 2, **characterised** by the output power of the HF generator being adjusted in response to temperature sensors and/or moisture sensors.

4. A method as claimed in claim 1, 2 or 3, **characterised** by the output power of the HF generator being adjusted in response to the flow rate of the medium or the fluid through the pipe.

5. A method as claimed in claim 1, 2, 3 or 4, **characterised** by the operating frequency of the HF generator being 13.56 MHz or a frequency suited for the medium in question, which means that the frequency of the output of the generator is chosen such that a major portion of the energy contained in said output of the HF generator is transferred to the medium.

6. An electrode system to be used by a method as claimed in claims 1, 2, 3 or 4, **characterised** in that it comprises two ring electrodes such as ribbon electrodes (14, 16) of an electrically well conducting metal, such as copper, brass or aluminium, said electrodes being arranged around the outer side of a pipe (12) of a non-conducting material presenting substantially no dielectric losses in such a way that a longitudinal electrical field arises between the two ring electrodes when an HF voltage is applied thereon.

7. An electrode system as claimed in claim 6, **characterised** in that the positions of the electrode rings or ribbons (14, 16) are adjustable by displacing said electrodes in the longitudinal direction of the pipe in such a manner that the distance, i.e. the pipe length, between the electrodes is optimally adjusted to the materials to be subjected to an HF processing.

8. An electrode system as claimed in claim 6 or 7, **characterised** in that the inner diameter of the ring electrodes corresponds to the outer diameter of the pipe, i.e. said inner diameter is substantially equal to said outer diameter of the pipe.

9. An electrode system as claimed in one or more of the preceding claims 6 to 8, **characterised** in that the pipe at both ends is terminated by flanges (24, 26) of metal, preferably an electrically well conducting metal, and that the choice of material depends on said material being capable of standing up to contact with the medium to be heated.

10. An assembly for carrying out the method as claimed in one or more of the preceding claims 1 to 4, wherein the assembly comprises an insulating pipe (12) forming part of a conveying system for a medium to be heated, **characterised** in that two substantially circumferential electrodes (14, 16) are arranged to surround the pipe at a mutual axial distance, each of the electrodes being connected to a terminal on an HF generator (22).

**Patentansprüche**

1. Verfahren zum Heizen eines Mediums mittels eines hochfrequenten elektrischen Stroms, wobei das Medium durch ein Rohr (12) aus einem elektrisch nicht leitenden Material, das im wesentlichen keine dielektrischen Verluste mit sich bringt, geführt wird, bei diesem Verfahren zwei Elektroden (14, 16) um das Rohr herum angeordnet sind, besagte Elektroden mit den Anschlüssen eines HF-Generators verbunden sind und somit eine HF-Spannung von dem HF-Generator an die Elektroden angelegt wird, dadurch gekennzeichnet, daß die Elektroden im wesentlichen umlaufend und um den Umfang des Rohrs herum mit einem axialen Abstand zueinander angeordnet sind.

2. Verfahren nach Anspruch 1, dadurch gekennzeichnet, daß das Medium eine Flüssigkeit ist, die durch ein Isolationsrohr fließt.

3. Verfahren nach Anspruch 1 oder 2, dadurch gekennzeichnet, daß der Stromausgang des HF-Generators in Antwort auf Temperatursensoren und/oder Feuchtigkeitssensoren eingestellt wird.

4. Verfahren nach einem der vorangegangenen Ansprüche, dadurch gekennzeichnet, daß der Stromausgang des HF-Generators in Antwort auf die Fließrate des Mediums oder der Flüssigkeit durch das Rohr eingestellt wird.

5. Verfahren nach einem der vorangegangenen Ansprüche, dadurch gekennzeichnet, daß die Betriebsfrequenz des HF-Generators 13,56 MHz oder eine Frequenz beträgt, die für das in Frage stehende Medium geeignet ist, was bedeutet, daß die Frequenz des Ausgangs des Generators so gewählt ist, daß ein Hauptanteil der von besagtem Ausgang des HF-Generators abgegebenen Energie auf das Medium übertragen wird.

6. Elektrodensystem zur Verwendung bei einem Verfahren nach einem der Ansprüche 1 bis 4, dadurch gekennzeichnet, daß es zwei Ringelektroden, wie Bandelektroden (14, 16) aus einem elektrisch gut leitenden Material, wie Kupfer, Messing oder Aluminium, umfaßt, wobei besagte Elektroden um die Außenseite eines Rohrs (12) aus einem nicht leitenden Material, das im wesentlichen keine dielektrischen Verluste mit sich bringt, herum derart angeordnet sind, daß ein longitudinales elektrisches Feld zwischen den beiden Ringelektroden entsteht, wenn eine HF-Spannung an dieselben angelegt wird.

7. Elektrodensystem nach Anspruch 6, dadurch gekennzeichnet, daß die Positionen der Ringelektroden oder Bandelektroden (14, 16) durch Versetzen besagter Elektroden entlang der Längsrichtung des Rohrs so einstellbar sind, daß der Abstand, d.h. die Rohrlänge, zwischen den Elektroden optimal an die Materialien, die einem HF-Bearbeiten ausgesetzt werden sollen, anpaßbar sind.

8. Elektrodensystem nach Anspruch 6 oder 7, dadurch gekennzeichnet, daß der Innendurchmesser der Ringelektroden dem Außendurchmesser des Rohrs entspricht, d.h. besagter Innendurchmesser ist im wesentlichen gleich groß wie besagter Außendurchmesser des Rohrs.

9. Elektrodensystem nach einem der Ansprüche 6 bis 8, dadurch gekennzeichnet, daß das Rohr an beiden Enden durch Flansche (24, 26) aus Metall, vorzugsweise einem elektrisch gut leitenden Metall, begrenzt ist, und daß die Wahl des Materials von besagtem Material, welches dazu fähig ist, dem Kontakt mit dem zu heizenden Medium standzuhalten, abhängt.

10. Anordnung zum Durchführen des Verfahrens nach einem der Ansprüche 1 bis 4, wobei die Anordnung ein Isolationsrohr (12) umfaßt, das einen Teil eines Beförderungssystems für ein zu heizendes Medium bildet, dadurch gekennzeichnet, daß zwei im wesentlichen umlaufend ausgebildete Elektroden (14, 16) um das Rohr herum mit einem axialen Abstand zueinander angeordnet sind, wobei jede der Eletroden mit einem Anschluß von einem HF-Generator (22) verbunden ist.

**Revendications**

1. Procédé de chauffage de milieux par énergie électrique à haute fréquence, selon lequel le milieu est délivré à travers un tuyau (12) en un matériau électriquement non conducteur ne présentant pratiquement aucune perte diélectrique, et selon lequel deux électrodes (14, 16) sont disposées autour du tuyau, lesdites électrodes étant reliées aux bornes d'un générateur HF et de telle sorte qu'une tension HF provenant du générateur HF est appliquée aux électrodes, caractérisé en ce que les électrodes sont sensiblement circonférentielles et disposées périphériquement autour du tuyau à une distance axiale mutuelle.

2. Procédé selon la revendication 1, caractérisé en ce que le milieu est un fluide s'écoulant à travers un tuyau isolant.

3. Procédé selon la revendication 1 ou 2, caractérisé en ce que la puissance de sortie du générateur HF est réglée grâce à des capteurs de température et/ou des capteurs d'humidité.

4. Procédé selon la revendication 1, 2 ou 3, caractérisé en ce que la puissance de sortie HF est réglée en réponse au débit du milieu ou du fluide à travers le tuyau.

5. Procédé selon la revendication 2, 3, ou 4, caractérisé par la fréquence de fonctionnement du générateur HF de 13,56 MHz ou une fréquence appropriée pour le milieu en question, ce qui signifie que la fréquence de la puissance de sortie du générateur est choisie de telle sorte qu'une majeure partie de l'énergie contenue dans ladite puissance de sortie du générateur HF est transférée au milieu.

6. Système d'électrodes pour la mise en oeuvre du procédé selon les revendications 1, 2, 3 ou 4, caractérisé en ce qu'il comporte deux électrodes annulaires, telles que des électrodes sous forme de ruban (14, 16) en un métal électriquement bon conducteur tel que du cuivre, du laiton ou de l'aluminium, lesdites électrodes étant disposées autour du côté extérieur d'un tuyau (12) en un matériau non conducteur ne présentant pratiquement aucune perte diélectrique, de telle manière qu'un champ électrique longitudinal s'établit entre les deux électrodes annulaires lorsqu'une tension HF leur est appliquée.

7. Système d'électrodes selon la revendication 6, caractérisé en ce que les positions des anneaux ou rubans d'électrode (14, 16) sont réglables en déplaçant lesdites électrodes dans le sens longitudinal du tuyau de telle manière que la distance, c'est-à-dire la longueur du tuyau, entre les électrodes est réglée de façon optimale aux matériaux devant être soumis à un traitement HF.

8. Système d'électrodes selon la revendication 6 ou 7, caractérisé en ce que le diamètre intérieur des électrodes annulaires correspond au diamètre extérieur du tuyau, c'est-à-dire que ledit diamètre intérieur est sensiblement égal audit diamètre extérieur du tuyau.

9. Système d'électrodes selon l'une ou plusieurs des revendications précédentes, 6 à 8, caractérisé en ce que le tuyau est terminé à ses deux extrémités par des brides (24, 26) de métal, de préférence d'un métal électriquement bon conducteur, et en ce que le choix du matériau dépend dudit matériau capable de résister à un contact avec le milieu devant être chauffé.

10. Ensemble de mise en oeuvre du procédé selon l'une ou plusieurs des revendications 1 à 4, ledit ensemble comportant un tuyau isolant (12) constituant une partie d'un système d'acheminement pour un milieu devant être chauffé, caractérisé en ce que deux électrodes sensiblement circonférentielles (14, 16) sont disposées pour entourer le tuyau à une distance axiale mutuelle, chacune des électrodes étant connectée à une borne d'un générateur HF (22).

Fig. 1

Fig. 2